# EUROPÄISCHE PATENTSCHRIFT

(11) **EP 2 944 859 B1**
(45) Veröffentlichungstag und Bekanntmachung des Hinweises auf die Patenterteilung: **19.12.2018**
(21) Anmeldenummer: 15001350.6
(22) Anmeldetag: 06.05.2015
(51) Int. Cl.: F16L 59/20, F16L 58/18

(54) **ABDECKEN EINES ROHRABSCHNITTES, INSBESONDERE EINER VERBINDUNGSSTELLE VON FERNWÄRMEROHREN**
COVERING OF A TUBE SECTION, IN PARTICULAR A CONNECTION POINT BETWEEN DISTRICT HEATING TUBES
REVÊTEMENT D'UNE SECTION DE TUYAU, EN PARTICULIER POINT DE LIAISON DE TUYAUX DE RÉSEAU DE CHAUFFAGE À DISTANCE

(30) Priorität: 14.05.2014 DE 102014106801
(43) Veröffentlichungstag der Anmeldung: 18.11.2015
(73) Patentinhaber: Enerpipe GmbH, 91161 Hilpoltstein (DE)
(72) Erfinder: Leipold, Oliver, 91161 Hilpoltstein (DE)
(74) Vertreter: Schneider, Andreas

(56) Entgegenhaltungen:
- WO-A1-00/52381
- WO-A1-2014/032194
- US-A- 3 425 456

## Beschreibung

Die Erfindung betrifft ein Verfahren und eine Abdeckvorrichtung zum Abdecken eines Rohrabschnittes mit Hilfe einer das Rohr umgreifenden Abdeckvorrichtung, insbesondere zum Abdecken einer Verbindungsstelle von zwei oder mehr medienführenden Rohren. Die Erfindung betrifft weiterhin ein Verfahren zum Nachisolieren eines solchen Rohrabschnittes im Anschluß an ein solches Abdecken.

Fernwärmerohre bestehen aus mindestens einem Mediumrohr, einer das Mediumrohr umgebenden Isolierung (Wärmedämmung) und einem Außenmantel, welcher das Rohr vor mechanischer Beschädigung schützt. Bei der Verlegung der Fernwärmerohre in einem Rohrgraben müssen die Rohrenden an ihren Stoßstellen miteinander verbunden werden. Hierzu müssen der Außenmantel sowie die Wärmedämmung entfernt werden. Erst dann ist eine Verbindung der Mediumrohre mittels Press- oder Schraubverbindungen möglich. Nach Verbindung der Mediumrohre ist es notwendig, an der freigelegten Verbindungsstelle die Wärmeisolierung wieder herzustellen.

Es ist bekannt, hierzu eine Abdeckvorrichtung zu verwenden, bei der zwei das Rohr umgreifende Formhälften mittels Schrauben und Muttern miteinander verbunden werden, bevor die Abdichtung der Formhälften, beispielsweise mit Hilfe einer Butyldichtungsmasse, erfolgt. Nachteilig bei dieser Vorrichtung ist die aufwendige und sehr zeitintensive Montage der Vielzahl von Schrauben und Muttern.

Um eine Verwendung einer Vielzahl von Schrauben und Muttern zu vermeiden, ist es bereits bekannt, die Formhälften mittels Rast- oder Schnappelementen zu verbinden. Die Formhälften werden anschließend mit Hilfe zusätzlicher Verschlußelemente, beispielsweise Spannverschlüssen, fixiert. Die Abdichtung der Formhälften erfolgt zumeist mit Hilfe eines auf die Formhälften aufzubringenden Klebstoffes. Bei dieser Lösung ist es von Nachteil, daß während der Montage sämtliche Bauteile der Abdeckvorrichtung zueinander in Position gehalten werden müssen, damit die Verschlußelemente, beispielsweise Spannverschlüsse, angebracht werden können, welche die Formhälften verspannen und dadurch in ihrer Montageendposition zueinander halten. Das Anbringen dieser Verschlußteile muß dabei an mehreren Stellen gleichzeitig erfolgen. Eine solche Montage kann aus diesem Grund nicht von einem einzelnen Arbeiter durchgeführt werden. Von Nachteil ist ebenfalls die aufwendige Abdichtung mit Hilfe des Klebstoffes unter Baustellenbedingungen. Zudem wird für die Montage, genauer gesagt zur Herstellung der Rastverbindungen, ein erheblicher Kraftaufwand benötigt. Dies birgt ein erhebliches Verletzungsrisiko für den die Montage durchführenden Arbeiter.

In WO 00/52381 A1 ist ein Verfahren zum Abdichten der Verbindung zwischen zwei Rohren beschrieben, bei dem ein mit einem Dichtungsmittel beschichteter Schrumpfschlauch verwendet wird, um eine Hülle, die einen Rohrabschnitt überdeckt, zu fixieren. Die Hülle ihrerseits kann aus einzelnen Halbschalen bestehen, die mittels Verschlußmittel festgehalten werden. Die Abdichtung erfolgt mittels Klebstoff.

Eine Aufgabe der vorliegenden Erfindung ist es, eine Lösung zum Abdecken eines Rohrabschnittes, insbesondere zum Zweck der anschließenden Nachisolierung, bereitzustellen, für die auch unter Baustellenbedingungen eine besonders einfache Montage, vorzugsweise mit nur einem einzigen Arbeiter möglich ist.

Diese Aufgabe wird durch ein Verfahren nach Anspruch 1 insbesondere durch ein Verfahren nach Anspruch 4 gelöst. Diese Aufgabe wird auch durch eine Vorrichtung nach Anspruch 5 gelöst.

Vorteilhafte Ausführungen der Erfindung sind in den Unteransprüchen angegeben.

Die im Folgenden im Zusammenhang mit dem Verfahren erläuterten Vorteile und Ausgestaltungen gelten sinngemäß auch für die erfindungsgemäße Vorrichtung und umgekehrt.

Die Erfindung geht von der an sich bekannten Lösung aus, zum Abdecken eines Rohrabschnittes eine Abdeckvorrichtung vorzusehen, bei der mehrere miteinander verbindbare Abdeckelemente, die beispielsweise in Gestalt von Halbschalen ausgeführt sein können, zur Bildung einer Rohrummantelung an dem Rohr montiert werden und dabei das Rohr umgreifen. Im Rahmen dieser Beschreibung wird davon ausgegangen, daß das von der Abdeckvorrichtung zu umgreifende Rohr aus einem einzelnen Rohr oder aus mehreren, insbesondere parallel zueinander verlaufenden Teilrohren bestehen kann.

Eine Grundidee der Erfindung ist es, die Abdichtung der Abdeckelemente dadurch zu erreichen, daß auf wenigstens ein Ende der sich aus den montierten Abdeckelementen ergebenden Ummantelung ein an dem Rohr anliegender Dichtring aufgeschoben wird. Hierdurch wird nicht nur die Position der Ummantelung an dem Rohr festgelegt. Zugleich bildet der Dichtring auch die Voraussetzung für die nachfolgende druckdichte Abdichtung der Abdeckung. Die Verwendung eines solchen Dichtringes ist an wenigstens einem Ende der Ummantelung vorgesehen. Bereits die Verwendung eines einzigen Dichtringes ermöglicht eine vereinfachte Montage und einen gewissen Ausgleich von Lagetoleranzen des Rohres. Vorzugsweise wird ein solcher Dichtring aber an allen Enden der Ummantelung angebracht, also beispielsweise an zwei sich gegenüberliegenden Enden einer einfachen, geraden oder bogenförmigen Ummantelung, an den drei Enden einer T-förmigen Ummantelung zur Abdeckung eines Abzweiges oder an vier Enden einer kreuzförmigen Ummantelung zur Abdeckung zweier sich gegenüberliegender Abzweigungen.

Der eigentliche Kern der Erfindung besteht in der Verwendung eines mit dem Dichtring zusammenwirkenden, die Ummantelung vollständig umgreifenden Verschlußringes, welcher auf den Verbindungsbereich des Dichtringes mit der Ummantelung derart aufgesetzt wird, daß der Verschlußring sowohl den Dichtring als auch die Ummantelung mechanisch kontaktiert. Dieser Verschlußring dient zur Fixierung des Dichtringes an der Ummantelung und damit zugleich zur Ausbildung einer druckdichten Verbindung der Ummantelung mit dem Rohr. Damit ist eine mit nur wenigen Handhabungsschritte ausführbare und besonders einfache Montage möglich. Für die Montage wird kein Kleber benötigt, so daß die Montage auch unter Baustellenbedingungen, wie Schlamm, Regen usw. einfach ausgeführt werden ist.

Das somit beschriebene Montageprinzip bzw. der dahinterstehende konstruktive Aufbau der Abdeckvorrichtung, insbesondere die Kombination von Dichtring und darüberliegendem Verschlußring, ermöglicht einen Ausgleich von vergleichsweise großen Fertigungstoleranzen oder Schrägstellungen der Rohre, beispielsweise aufgrund einer verlege- oder fertigungsbedingten Biegung eines Rohrabschnittes.

Als für eine einfache Montage besonders vorteilhaft hat es sich herausgestellt, wenn die Abdeckelemente kraftschlüssig, vorzugsweise ausschließlich mittels einfacher Rast- oder Schnappverbindungen, miteinander verbunden werden.

Vorzugsweise erfolgt dann die Montage der Abdeckelemente an dem Rohr derart, daß die Abdeckelemente zunächst um das Rohr gelegt und vormontiert werden, indem sie lose aber verlierfest miteinander verbunden werden. Als Montagehilfe kommen dabei vorzugsweise erste, für eine Vormontage entsprechend ausgebildete und geeignete Rast- oder Schnappelemente zum Einsatz. Die Abdeckelemente können dann mit geringem Kraftaufwand in einer ersten Raststufe gefügt werden. Dies ist insbesondere deshalb von Vorteil, weil anschließend ein einziger Arbeiter die häufig unhandlichen und vergleichsweise schweren Abdeckelemente montieren kann, ohne daß diese hierfür in Position gehalten werden müssen. Anschließend werden die vormontierten Abdeckelemente endmontiert, indem sie fest miteinander verbunden werden. Hierzu werden die Abdeckelemente mit Hilfe von zweiten, für eine Endmontage entsprechend ausgebildete und geeignete Rast- oder Schnappelementen in ihre Endlage zueinander gebracht. Dabei ist die Position der endmontierten Abdeckelemente auf dem Rohr nach dem Herstellen dieser festen Verbindung noch veränderbar, so daß die endmontierten Abdeckelemente abschließend in ihre Montageendposition zum Rohr gebracht werden.

Die Abdeckelemente sind vorzugsweise derart ausgeführt, daß sie während ihrer Montage keinerlei mechanischen Kontakt zu dem Rohr haben. Die Montage ist daher ohne einen erheblichen Kraftaufwand, in den meisten Fällen nahezu spannungs- oder kraftfrei möglich. Dies macht die Montage nicht nur besonders einfach, sondern hat auch eine verringerte Verletzungsgefahr zur Folge.

Die Erfindung ist insbesondere dann besonders vorteilhaft einsetzbar, wenn es sich bei dem abzudeckenden Rohrabschnitt um einen nachzuisolierende Abschnitt handelt, beispielsweise eine Verbindungsstelle, so daß in einen zwischen der Abdeckvorrichtung einerseits und dem Rohr andererseits bestehenden Zwischen- oder Aufnahmeraum ein Isoliermaterial eingebracht werden muß. Bei diesem Isoliermaterial handelt es sich häufig um einen Isolierschaum, der durch eine in einer der Abdeckelemente angeordnete Einlaßöffnung in den Aufnahmeraum eingebracht wird. Die bei dem Einbringen dieses Isoliermaterials auf die Abdeckelemente wirkenden Kräfte wirken dann gegen die kraftschlüssigen Verbindungen der Rast- oder Schnappelemente.

Ein herausragender Vorteil der vorliegenden Erfindung besteht nämlich darin, daß bei der Montage des Verschlußringes eine Anzahl formschlüssiger Verbindungen mit der Ummantelung hergestellt werden können derart, daß die bei der Montage der Abdeckelemente ausgebildeten kraftschlüssigen Verbindungen gegen ein ungewolltes öffnen gesichert sind. Während sich ohne diese zusätzlichen formschlüssigen Verbindungen die auf Kraftschluß (Reibschluß) beruhenden Verbindungen der Abdeckelemente bei einem Überschreiten einer Grenzkraft öffnen würden, müssen diese kraftschlüssigen Verbindungen in diesem Fall nur noch vergleichsweise geringe, vorzugsweise aber überhaupt keine Kräfte mehr aufnehmen. Die Verbindungselemente, beispielsweise Schnapp- oder Rastelemente, zur Verbindung der Abdeckelemente untereinander könne daher auch sehr viel weniger robust und weniger starr ausgeführt sein, wodurch sich einerseits die Handhabung vereinfacht, andererseits aber auch die Herstellungskosten verringern. Auch die Verletzungsgefahr beim Fügen der Abdeckelemente ist im Vergleich zu den aus dem Stand der Technik bekannten Lösungen geringer.

Der Verschlußring dient mit anderen Worten nicht nur zur Lagesicherung des Dichtringes an der Ummantelung, sondern in diesem Fall auch zur Sicherung der kraftschlüssigen Verbindungen der einzelnen Abdeckelemente der Ummantelung untereinander. In einer besonders bevorzugten Ausführungsform der Erfindung bildet zu diesem Zweck jedes der hierfür vorgesehenen Formschluß-Verbindungselemente des Verschlußringes eine gemeinsame Aufnahme für geeignete, insbesondere speziell hierfür vorgesehene Konstruktionselemente beider Abdeckelemente aus.

Für eine einfache Montage hat es sich zudem als besonders vorteilhaft erwiesen, wenn der Verschlußring mehrteilig ausgeführt ist. Das mit einem Verbinden der Teile verknüpfte Schließen des Verschlußringes stellt dann zugleich den Montagevorgang des Verschlußringes an der Ummantelung dar.

Sind die Teile des Verschlußringes kraftschlüssig, vorzugsweise ausschließlich mittels einfacher Rast- oder Schnappverbindungen, miteinander verbindbar, dann weist vorzugsweise auch der Verschlußring zur Sicherung dieser kraftschlüssigen Verbindungen Formschluß-Verbindungselemente auf. Bei dem Fügen der Teile des Verschlußringes sind somit eine Anzahl formschlüssiger Verbindungen dieser Teile untereinander herstellbar derart, daß die hergestellten kraftschlüssigen Verbindungen dieser Teile gegen ungewolltes Öffnen gesichert sind. Anders ausgedrückt weist der Verschlußring in diesem Fall erste und zweite Formschluß-Verbindungselemente auf und erfüllt damit eine Doppelfunktion. Einerseits stellen erste Formschluß-Verbindungselemente die verschlußringeigenen kraftschlüssigen Verbindungen kraftfrei, andererseits stellen zweite Formschluß-Verbindungselemente die kraftschlüssigen Verbindungen der Abdeckelemente kraftfrei.

Von Vorteil kann es darüber hinaus sein, wenn auch der Dichtring mehrteilig ausgeführt ist. In diesem Fall kann der Dichtring auch erst nach der Montage der Abdeckelemente angebracht werden. Der Dichtring muß mehrteilig ausgebildet sein, wenn keine Verbindungsstelle abzudecken ist, sondern lediglich eine Abdeckung eines Bereiches eines durchgehenden Rohres erfolgen soll, beispielsweise im Zuge einer Reparatur einer defekten oder unvollständigen Isolierung. Ist der Dichtring hingegen einteilig ausgeführt, muß er vor der Herstellung der Verbindungsstelle der Rohre auf eines der Röhre aufgeschoben werden.

Ein weiterer Vorteil besteht darin, daß einige der beteiligten Bauteile, insbesondere die Abdeckelemente, spiegelgleich ausgeführt werden können, so daß sich die Herstellungs- und Lagerhaltungskosten für diese Bauteile verringern.

Zusammenfassend wird durch die vorliegende Erfindung eine Lösung zum Abdecken eines Rohrabschnittes, insbesondere zum Zweck der anschließenden Nachisolierung, bereitgestellt. Die erfindungsgemäße Abdeckvorrichtung ist unter Baustellenbedingungen nicht nur besonders einfach montierbar. Es werden auch weniger Bauteile benötigt, da keine extra Verschlußelemente verwendet werden. Die Durchführung der Montage ist witterungsunabhängig, da keine Klebeverbindung nötig ist. Außerdem ist das Verletzungsrisiko geringer, da die Montage im wesentlichen spannungs- bzw. kraftfrei erfolgt. Die erfindungsgemäße Lösung zeichnet sich zusätzlich dadurch aus, daß Schrägstellungen des Rohres und dergleichen, ausgeglichen werden können, ohne daß hierzu ein erhöhter Kraftaufwand bei der Montage notwendig ist. Besonders vorteilhaft ist es, daß die gesamte Montage mit nur einem einzigen Arbeiter ausgeführt werden kann.

Ein Ausführungsbeispiel der Erfindung wird nachfolgend anhand der Zeichnungen näher erläutert. Hierbei zeigen:
- Fig. 1: zwei Arten von Fernwärmerohren,
- Fig. 2: eine Halbschale,
- Fig. 3: ein Abdeckelement,
- Fig. 4: eine Dichtung für ein Abdeckelement,
- Fig. 5: einen Schnitt durch ein Abdeckelement im montierten Zustand,
- Fig. 6: einen Dichtring,
- Fig. 7: einen Schnitt durch eine an einem Rohr mit eine Dichtring angebrachte Halbschale,
- Fig. 8: ein Verschlußteil eines Verschlußringes,
- Fig. 9: ein Detail des Verschlußringes im montierten Zustand an eine Ummantelung,
- Fig. 10: einen Schnitt durch eine an einem Rohr mit eine Dichtring angebrachte Halbschale mit montiertem Verschlußring,
- Fig. 11: eine an einem Rohr angebrachte, teilweise aufgeschnittene Abdeckvorrichtung.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

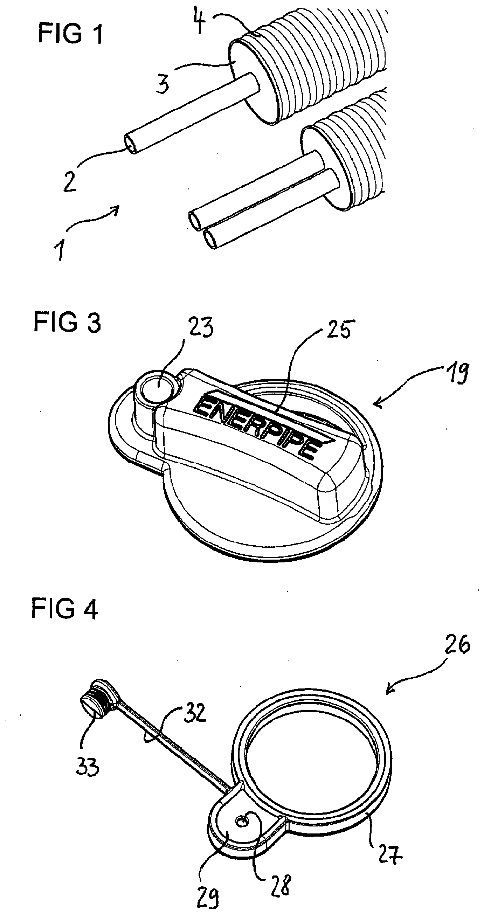

In Fig. 1 sind zwei Arten von Fernwärmerohren 1 dargestellt, wie sie im Zusammenhang mit der vorliegenden Erfindung verwendet werden können. Das eigentliche Mediumrohr 2 ist von einer Wärmedämmung 3 umgeben. Diese ist von einem Außenmantel 4 geschützt. Dargestellt sind Fernwärmerohre 1 mit einem und mit zwei Mediumrohren 2.

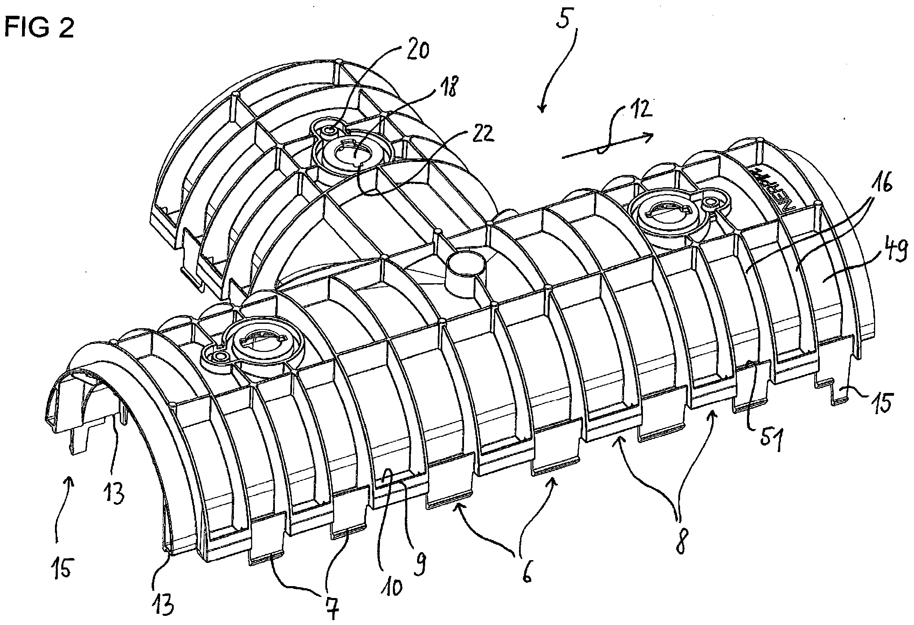

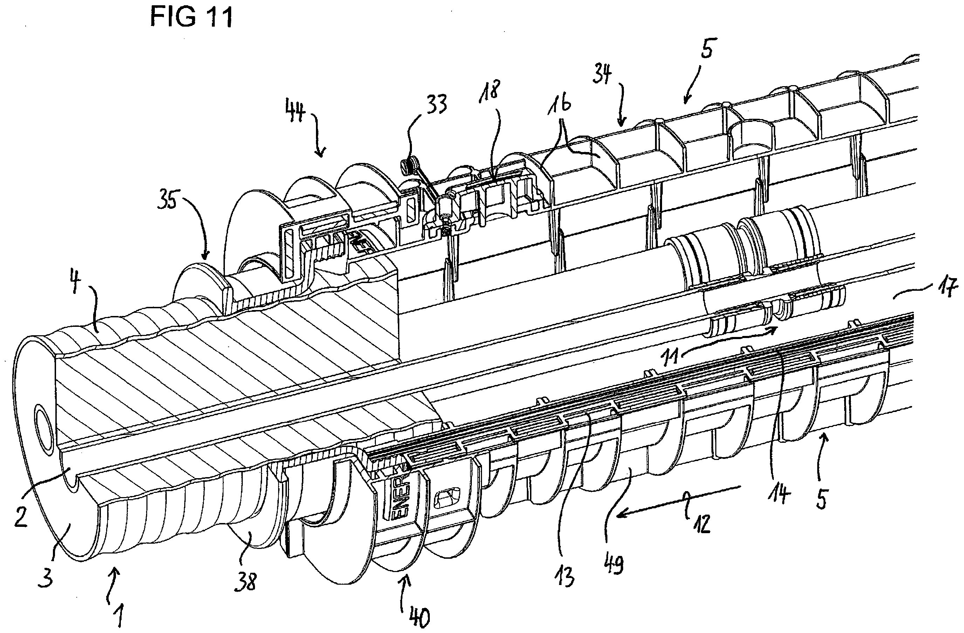

Zur Nachisolierung einer Verbindungsstelle 11 von Mediumrohren 2, siehe Fig. 11, werden wenigstens zwei Halbschalen benötigt, welche die Fernwärmerohre 1 im montiertem Zustand umgeben. In Fig. 2 ist beispielhaft eine Halbschale 5 dargestellt, wie sie zur Abdeckung eines T-förmigen 90°-Abzweiges eines Fernwärmerohres verwendet werden kann.

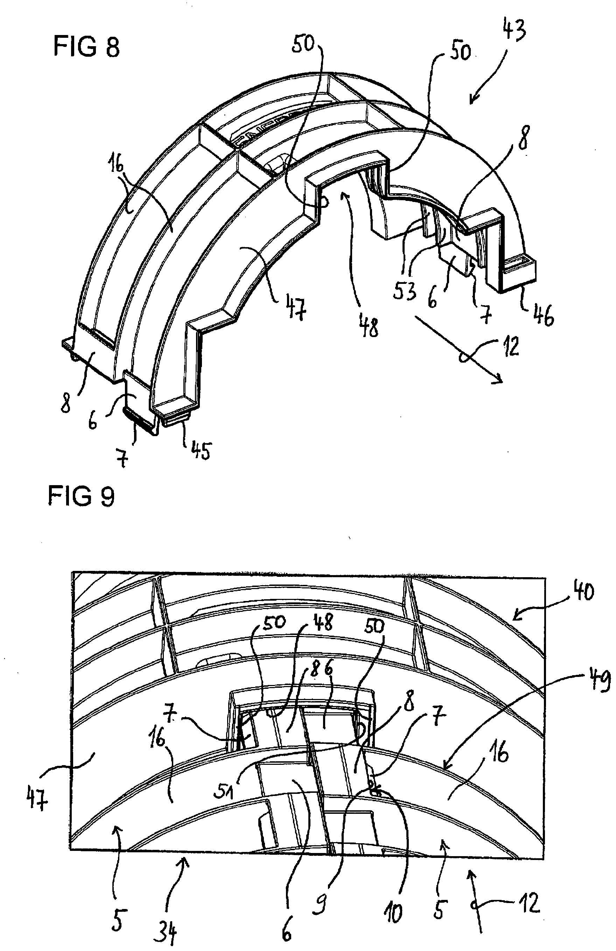

Die beispielsweise aus einem thermoplastisch verarbeitbaren Kunststoffmaterial gefertigten Halbschalen 5 werden mit Hilfe von Schnappverbindern 6, welche direkt an den Halbschalen 5 angeformt sind, gefügt. Bei den Schnappverbindern 6 handelt es sich um auslenkbare Schnapparme, die an ihren Freienden jeweils eine Rastnase 7 aufweisen. Die Schnappverbinder 6 schnappen in dafür vorgesehenen, korrespondierenden schachtförmigen Rastausnehmungen 8 an der als Gegenstück dienenden Halbschale 5 ein. Dabei hintergreifen die Rastnasen 7 die Ränder 9 der Austrittsöffnungen 10 der Rastausnehmungen 8, siehe auch Fig. 9. Die Schnappverbinder 6 und die entsprechenden Rastausnehmungen 8 sind dabei abwechselnd jeweils längs einer in Rohrlängsrichtung 12 verlaufenden Linie angeordnet. Auch im zusammengebauten Zustand haben die Halbschalen 5 keinerlei Kontakt zu den Außenmänteln 4 der Fernwärmerohre 1, so daß die Montage ohne erheblichen Kraftaufwand möglich ist.

Zur Abdichtung der beiden Halbschalen 5 zueinander sind die Anlageflächen 13, mit der die Halbschalen 5 aneinander anliegen, konstruktiv so gestaltet, daß eine Rechteckdichtung 14 formschlüssig eingelegt werden kann, siehe auch Fig. 11. Die Schnappverbinder 6 und die Rastausnehmungen 8 sind entlang dieser Anlageflächen 13 positioniert, so daß sich die Rechteckdichtung 14 in unmittelbarer Nähe der Verbindungselemente 6, 8 befindet, wodurch eine besonders sichere Dichtwirkung gewährleistet ist.

Mindestens einer der Schnappverbinder 15 ist verlängert ausgeführt und wird als Montagehilfe genutzt. Mittels dieser Montagehilfe können die beiden Halbschalen 5 verlierfest vormontiert werden.

Die Halbschalen 5 besitzen eine kunststoffgerechte Anordnung von Versteifungsrippen 16, welche sowohl die Kontur- und Maßhaltigkeit, als auch eine zusätzliche Versteifung der Gesamtkonstruktion begünstigen.

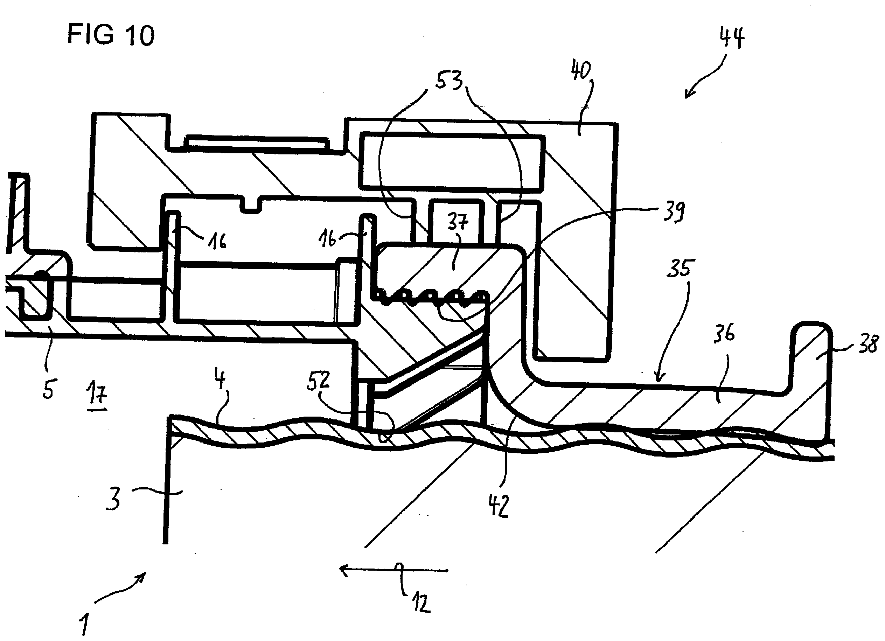

Zur späteren Einbringung von Dichtungsmaterial in einen Zwischenraum 17 zwischen den montierten Halbschalen 5 und den Mediumrohren 2, siehe Fig. 10 und 11, umfassen die Halbschalen 5 jeweils mindestens eine Einfüllöffnung 18. Die Einfüllöffnung 18 ist durch ein Abdeckelement 19 verschließbar, siehe Fig. 3. Zudem ist in den Halbschalen 5 jeweils mindestens eine Entlüftungsöffnung 20 vorgesehen, die im montierten Zustand des Abdeckelements 19 von diesem ebenfalls abgedeckt wird.

An der Unterseite des Abdeckelements 19 ist ein nicht näher dargestelltes Verbindungselement angebracht, das zur Ausbildung eines Bajonettverschlusses mit einem entsprechend an den Halbschalen 5 ausgebildeten Verbindungsgegenstück 22 an der Einfüllöffnung 18 zusammenwirkt und bei montiertem Abdeckelement 19 für eine formschlüssige Verbindung beider Bauteile 19, 5 zueinander sorgt. Weiterhin ist, wie in Fig. 3 abgebildet, an dem Abdeckelement 19 ein mit der Entlüftungsöffnung 20 der Halbschalen 5 korrespondierender Entlüftungskanal 23 angebracht, der bei montiertem Abdeckelement 19 verhindert, daß eine in der Entlüftungsöffnung 20 zur Ausbildung eines Rückschlagventils einliegende Dichtungskugel 24 entfernt werden kann, zugleich aber sicherstellt, daß die überschüssige Luft kontrolliert aus dem mit dem Dichtungsmaterial zu befüllenden Zwischenraum 17 entweichen kann. Darüber hinaus ist an dem Abdeckelement 19 eine Handhabe 25 angebracht, die das Verschließen der Einfüllöffnung 18 vereinfacht.

Eine Dichtung 26 für das Abdeckelement 19, die einen Dichtungsring 27 zur Abdichtung der Einfüllöffnung 18 und einen daran angebrachten, mit einer Dichtungsöffnung 28 versehenen Dichtungslappen 29 zur Einlage zwischen der Entlüftungsöffnung 20 und dem Entlüftungkanal 23 aufweist, siehe Fig. 4, wird formschlüssig in die hierfür an der Halbschale 5 vorgesehene Ausnehmung 30 eingelegt und mit dem Abdeckelement 19 abgedeckt, womit eine vollständige Abdichtung gegenüber Druckwasser gewährleistet wird. Mit der Dichtung 26 über einen elastischen Steg 32 verbunden ist ein Verschlußstopfen 33, mit dem die Entlüftungsöffnung 20 des Abdeckelements 19 nach vollständiger Entlüftung des Innenraums 17 geschlossen werden kann.

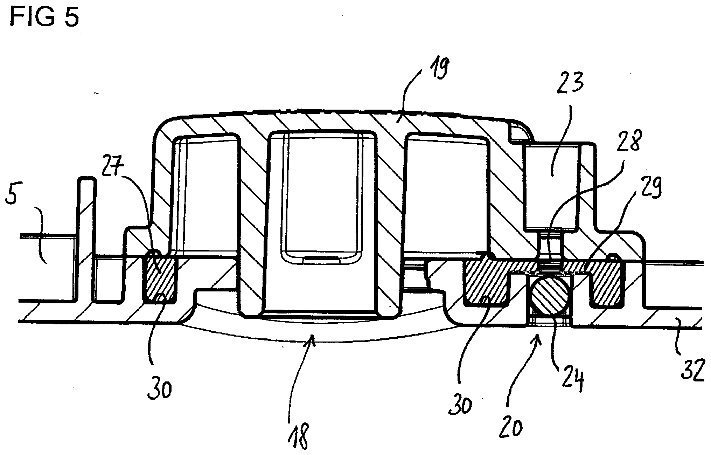

Die Dichtung 26 des Abdeckelements 19 liegt im montierten Zustand formschlüssig zwischen der Halbschale 5 und dem Abdeckelement 19 ein, siehe Fig. 5. Zwischen der Halbschale 5 und der Dichtung 26 befindet sich die Dichtungskugel 24, die zur Gewährleistung eines ausreichenden Auftriebs aus einem Material mit geringer Dichte besteht. Beim Einbringen des Dichtungsmaterials drückt das Dichtungsmaterial die Dichtungskugel 24 nach oben gegen die Dichtung 26, bis die Dichtungsöffnung 28 und damit die Entlüftungsöffnung 20 bzw. der Entlüftungskanal 23 vollständig verschlossen ist.

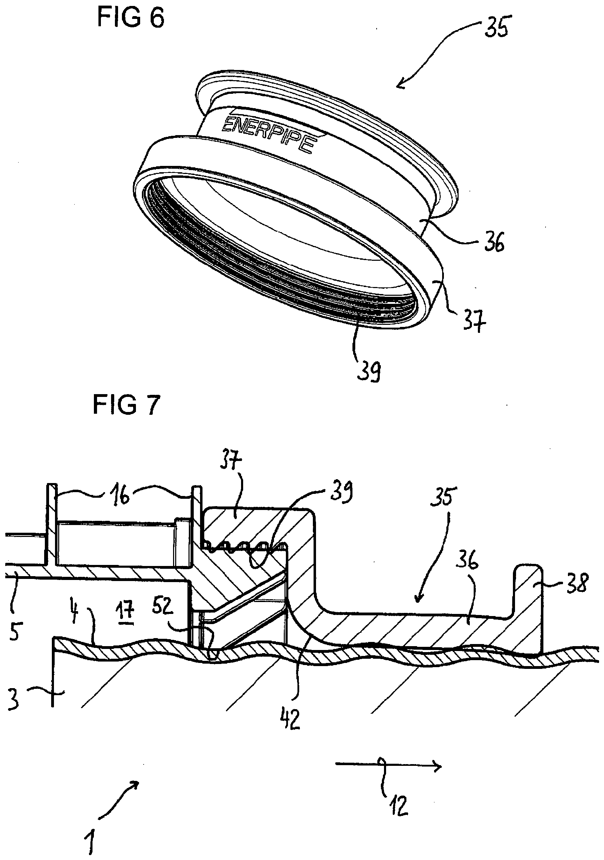

Als Verbindungselement zwischen dem Fernwärmerohr 1 und der aus den beiden Halbschalen 5 hergestellten Ummantelung 34 dient ein einteiliger, im wesentlichen hohlzylinderförmiger Dichtring 35, wie in Fig. 6 dargestellt. Der Dichtring 35 weist zwei aneinander angrenzende Ringelemente 36, 37 mit unterschiedlichen Durchmessern auf und besteht aus einem vergleichsweise weichen, beispielsweise gummiartigen Material.

Das eine Ringelement 36 des Dichtrings 35 ist als im Auslauf konisch ausgebildete Anlagefläche zur Anlage an dem Außenmantel 4 des Fernwärmerohres 1 ausgebildet. Die konische Ausbildung ermöglicht unter anderem eine bessere Abdichtung unabhängig von der Sinuswellenform des Außenmantels 4.

An dem freien Ende dieses Ringelements 36 ist ein nach Art eines nach außen ragenden Kragens ausgebildeter Handhabungsabschnitt 38 vorgesehen, mit dem der Dichtring 35 über das Fernwärmerohr 1 gezogen bzw. auf das Fernwärmerohr 1 aufgeschoben wird, bevor die Mediumrohre 2 unter Ausbildung der Verbindungsstelle 11, siehe Fig. 11, miteinander verbunden werden.

Das andere Ringelement 37 des Dichtrings 35, das den größeren Durchmesser aufweist, dient als Anlagefläche zur direkten Anlage an den Halbschalen 5. Mit anderen Worten liegt diese Anlagefläche 37 an der aus zwei miteinander verbundenen Halbschalen 5 gebildeten Ummantelung 34 unmittelbar an. An der Innenseite dieses Ringelements 37 sind Dichtungslamellen 39 oder ähnliche Abdichtungselemente vorgesehen, die durch einen Verschlußring 40, siehe Fig. 10, bei der Endmontage an die Ummantelung 34 angepreßt werden und so eine gegen Druckwasser dichte Verbindung gewährleisten.

Der Übergangsbereich 42 zwischen dem ersten Ringelement 36 und dem zweiten Ringelement 37 ist als vergleichsweise dünnwandiger Biegebereich ausgeführt, so daß die Anlageflächen der beiden Ringelemente 36, 37 nicht zwingend parallel zueinander liegend an ihren jeweiligen Gegenflächen, nämlich dem Außenmantel 4 des Fernwärmerohres 1 und den Halbschalen 5, anliegen müssen, siehe Fig. 7. Hierdurch ist eine vorteilhafte Anpassung des Dichtrings 35 an das Fernwärmerohr 1 möglich, falls dieses nicht vollständig koaxial in die Ummantelung 34 eingeführt werden kann.

An jedem von einem Dichtring 35 verschlossenen Ende der Ummantelung 34 wird ein aus zwei schmalen, halbschalenförmigen Verschlußteilen 43 zusammensetzbarer Verschlußring 40 verwendet, siehe Fig. 8, um aus der mit Hilfe des Dichtrings 35 bereits an dem Fernwärmerohr 1 lagefixierten Ummantelung 34 abschließend die gewünschte druckdicht verschließbare Abdeckvorrichtung 44 zu bilden, siehe Fig. 10 und 11. Der Verschlußring 40 ist beispielsweise ebenfalls aus einem thermoplastisch verarbeitbaren Kunststoffmaterial gefertigt.

Die beiden Verschlußteile 43 werden mit Hilfe von Schnappverbindern 6 miteinander verbunden und, wie nachfolgend noch genauer erläutert, über eine formschlüssige Verbindung zueinander positioniert. Die als auslenkbare Schnapparme mit Rastnasen 7 ausgeführte Schnappverbinder 6 sind, ähnlich der Ausführung der Verbindungselemente bei den Halbschalen 5, direkt an den Verschlußteilen 43 angeformt. Wie bereits bei den Halbschalen 5 schnappen die Schnappverbinder 6 in dafür vorgesehenen, korrespondierenden schachtförmige Rastausnehmungen 8 an dem als Gegenstück dienenden Verschlußteil 43 ein. Auch hier sind die Schnappverbinder 6 und die entsprechenden Rastausnehmungen 8 jeweils paarweise längs einer in Rohrlängsrichtung 12 verlaufenden Linie angeordnet.

Der Formschluß zwischen den Verschlußteilen 43 wird durch parallel zu den Schnapparmen verlaufende Nasen 45 gewährleistet, die im montierten Zustand in entsprechend vorgesehenen, korrespondierenden Aufnahmeschächte 46 des jeweils anderen Verschlußteils 43 einliegen und dadurch die Endlage der Schnappverbinder 6 festlegen. Eine Auslenkung der elastischen Schnapparme ist dann nicht mehr möglich, so daß die Schnappverbindung gesichert ist und die Rastnasen 7 fest, unlösbar und unbeeinflußt von etwaigen an den Verschlußteilen 43 des Verschlußringes 40 angreifenden Öffnungskräften in den Rastausnehmungen 8 einliegen. Mit anderen Worten ist eine Entformung nicht mehr möglich.

Jedes Verschlußelement 43 weist in Rohrlängsrichtung 12 gesehen an einer seiner Enden eine sich nach innen erstreckende Seitenwand 47 auf, siehe Fig. 8. In dieser Seitenwand 47 ist am Scheitelpunkt des Verschlußelements 43 eine U-förmige Aussparung 48 ausgebildet. Im montierten Zustand liegt die Seitenwand 47 des Verschlußelements 43 in einer dafür vorgesehenen, zwischen zwei Versteifungsrippen 16 gebildeten Aufnahmenut 49 der darunterliegenden Halbschale 5 ein. Die Aussparung 48 nimmt dabei zugleich Konstruktionselemente der beiden Halbschalen 5 unter Ausbildung einer formschlüssigen Verbindung auf.

Zu diesem Zweck werden die Verschlußteile 43 um 90° zu den Halbschalen 5 versetzt gefügt, siehe Fig. 11. Die Aussparung 48 greift dann im Montageendzustand über denjenigen Verbindungsbereich der Halbschalen 5, in dem die Schnappverbinder 6 der Halbschalen 5 ineinandergreifen. Anders ausgedrückt greifen die U-Schenkel 50 der Aussparung 48 über den Schnapper 6, genauer gesagt liegt der eine U-Schenkel senkrecht zu dem Schnapparm an einer Rastnase 7 einer Schnappverbindung an und der andere U-Schenkel liegt an einer an der Basis des Schnapparmes vorgesehenen Sperrfläche 51 an, siehe Fig. 2 und 9. Dabei wird ein Formschluß zwischen dem Verschlußring 40 und der Ummantelung 34 gebildet, der ein Austreten der Schnapparme der Schnappverbinder 6 der Halbschalen 5 aus den Rastausnehmungen 8 sicher verhindert. Anders ausgedrückt wird erreicht, daß die Schnappverbindung der Halbschalen 5 über eine formschlüssige Verbindung zusammengehalten wird. Somit ist auch in diesem Fall ein Lösen der Schnappverbindung nicht mehr möglich. Die Schnappverbindung ist gesichert und die Rastnasen 7 liegen fest, unlösbar und unbeeinflußt von etwaigen an den Halbschalen 8 angreifenden Öffnungskräften in den Rastausnehmungen 8 ein. Eine Entformung ist auch hier ausgeschlossen. Hieraus ergibt sich der wesentliche Vorteil, daß in den Endbereichen der Ummantelung 34 bzw. der Abdeckvorrichtung 44, in denen die höchsten Spannungskräfte auftreten, beispielsweise aufgrund einer schrägen Verlegung der Fernwärmerohre 1, eine besonders feste Verbindung erzeugt wird.

Über den Verschlußring 40, der formschlüssig mit den Halbschalen 5 und dem Dichtring 35 verbunden ist, wird der Dichtring 35 in seiner Einbaulage fixiert und gehalten. Die Breite des Verschlußringes 40 ist dabei stets so gewählt, daß der Verbindungsbereich 41 des Dichtringes 35 mit der Ummantelung 34, also derjenige Bereich, in dem sich Dichtring 35 und Halbschalen 5 überlappen, im Montageendzustand von dem Verschlußring 40 beaufschlagt und damit kontaktierend überdeckt wird, siehe Fig. 10. So kann an beiden Enden der Ummantelung 34 eine durchgängige Abdichtung erzeugt werden. Die Halbschalen 5 liegen dann mit dafür vorgesehenen Anlageflächen 52 an dem Außenmantel 4 des Fernwärmerohres 1 an. Vorzugsweise ist auch der Verschlußring 40 konisch ausgeführt, so daß die abgebildete Montageendposition der Abdeckvorrichtung 44 mehr oder weniger zwangsweise erreicht bzw. eingenommen wird. Diesem Zweck dienen auch Zentrier- und Führungshilfen, beispielsweise in Gestalt von Anpreßrippen 53 an der Innenseite des Verschlußringes 40, die zugleich dafür sorgen, daß der Dichtring mit vordefinierter Kraft an die Halbschalen gepreßt wird, siehe Fig. 8 und 10, und/oder in Gestalt der Versteifungsrippen 16 an der Außenseite der Halbschalen 5.

Die zweiteilige Gestaltung des Verschlußringes 40 sowie der Ummantelung 34 bietet den wesentlichen Vorteil, daß alle Bauteile - bis auf der Dichtring 35 - nach Erstellung der Preßverbindung 11, die nicht zerstörungsfrei wieder gelöst werden kann, montiert werden können und somit die Gefahr einer Fehlmontage so gering als möglich gehalten wird.

Bei dem oben beschriebenen Abdeckungssystem werden als erstes die Dichtringe 35 auf die Fernwärmerohre 1 aufgeschoben. Hierbei muß noch nicht auf eine korrekte Positionierung der Dichtringe 35 geachtet werden. Nach der Herstellung der Verbindungsstelle 11 werden beide Halbschalen 5 um das Fernwärmerohr 1 gelegt und mittels der ersten Schnappstufe zur Vormontage gefügt. Da zu diesem Zeitpunkt zwischen den Halbschalen 5 und dem Fernwärmerohr 1 ein Luftspalt besteht, kann dies mit sehr geringem Kraftaufwand ausgeführt werden. Nun können die Halbschalen 5 mit beiden Händen sukzessive zusammengedrückt werden, bis alle Schnappverbinder 6 eingerastet sind. Danach werden die Dichtringe 35 an die Halbschalen 5 geschoben. Erst zu diesem Zeitpunkt wird die Lagepositionierung der Halbschalen 5 zum Fernwärmerohr 1 hergestellt. Jetzt können die Verschlußringe 40 um 90° versetzt auf den Halbschalen 5 aufgebracht und verschnappt werden. Ein gleichzeitiges Anbringen der Verschlußringe 40 ist dabei nicht erforderlich. Diese Montage ist für einen einzelnen Arbeiter möglich. Anschließend wird der entstandene Hohlraum 17 innerhalb der Abdeckvorrichtung 44 mit Dichtungsmaterial (nicht abgebildet) gefüllt und verschlossen. Bei dem Dichtungsmaterial kann es sich um einen Schaum handeln, beispielsweise um Zweikomponenten-Polyurethan-Schaum.

Abwandlungen von der hier lediglich beispielhaft beschriebenen Ausführungsform sind möglich, insbesondere hinsichtlich der konkreten konstruktiven Umsetzung der einzelnen Komponenten der Abdeckvorrichtung 44. So kann die Ummantelung 34 beispielsweise aus vier Viertelschalen zusammengesetzt sein usw.

Die Erfindung betrifft ein Verfahren und eine Abdeckvorrichtung 44 zum Abdecken eines Rohrabschnittes mit Hilfe einer das Rohr 1 umgreifenden Abdeckvorrichtung 44, insbesondere zum Abdecken einer Verbindungsstelle 11 von zwei oder mehr Fernwärmerohren oder anderen medienführenden Rohren. Die Erfindung betrifft weiterhin ein Verfahren zum Nachisolieren eines solchen Rohrabschnittes im Anschluß an ein solches Abdecken. Um eine auch unter Baustellenbedingungen besonders einfache Montage zu ermöglichen, wird vorgeschlagen, auf die Enden einer sich aus miteinander verbindbaren Abdeckelementen 5 ergebenden Rohrummantelung 34 einen an dem Rohr 1 anliegenden Dichtring 35 aufzuschieben, wodurch die Position der Ummantelung 34 an dem Rohr 1 festgelegt wird, und zur Fixierung des Dichtringes 35 an der Ummantelung 34 einen die Ummantelung 34 vollständig umgreifenden Verschlußring 40 auf den Verbindungsbereich 41 des Dichtringes 35 mit der Ummantelung 34 aufzusetzen derart, daß der Verschlußring 40 sowohl den Dichtring 35 als auch die Ummantelung 34 kontaktiert.

Alle in der Beschreibung, den nachfolgenden Ansprüchen und der Zeichnung dargestellten Merkmale können sowohl einzeln. als auch in beliebiger Kombination miteinander erfindungswesentlich sein.

### Bezugszeichenliste

- 1: Fernwärmerohr
- 2: Mediumrohr
- 3: Wärmedämmung
- 4: Außenmantel
- 5: Halbschale
- 6: Schnapper
- 7: Rastnase
- 8: Rastausnehmung
- 9: Rand
- 10: Austrittsöffnung
- 11: Verbindungsstelle
- 12: Rohrlängsrichtung
- 13: Anlagefläche
- 14: Rechteckdichtung
- 15: verlängerter Schnappverbinder
- 16: Versteifungsrippe
- 17: Zwischenraum
- 18: Einfüllöffnung
- 19: Abdeckelement
- 20: Entlüftungsöffnung
- 21: (frei)
- 22: Verbindungsgegenstück
- 23: Entlüftungskanal
- 24: Dichtungskugel
- 25: Handhabe
- 26: Dichtung
- 27: Dichtungsring
- 28: Öffnung
- 29: Dichtungslappen
- 30: Ausnehmung
- 31: (frei)
- 32: Steg
- 33: Stopfen
- 34: Ummantelung
- 35: Dichtring
- 36: erster Ringabschnitt
- 37: zweiter Ringabschnitt
- 38: Handhabe
- 39: Dichtungslamelle
- 40: Verschlußring
- 41: Verbindungsbereich
- 42: Übergangsbereich
- 43: Verschlußteil
- 44: Abdeckvorrichtung
- 45: Nase
- 46: Aufnahmeschacht
- 47: Seitenwand
- 48: Aussparung
- 49: Aufnahmenut
- 50: U-Schenkel
- 51: Sperrfläche
- 52: Anlagefläche
- 53: Anpreßrippe

## Patentansprüche

1. Verfahren zum Abdecken eines Rohrabschnittes eines Rohres (1) mit Hilfe einer das Rohr (1) umgreifenden Abdeckvorrichtung (44), insbesondere zum Abdecken einer Verbindungsstelle (11) von zwei oder mehr medienführenden Rohren (2),
wobei eine Anzahl miteinander verbindbarer Abdeckelemente (5) zur Bildung einer Rohrummantelung (34) an dem Rohr (1) montiert werden,
wobei auf wenigstens ein Ende der sich aus den montierten Abdeckelementen (5) ergebenden Ummantelung (34) ein an dem Rohr (1) anliegender Dichtring (35) aufgeschoben wird, wodurch die Position der Ummantelung (34) an dem Rohr (1) festgelegt wird, und
wobei zur Fixierung des Dichtringes (35) an der Ummantelung (34) ein die Ummantelung (34) vollständig umgreifender Verschlußring (40) auf den Verbindungsbereich (41) des Dichtringes (35) mit der Ummantelung (34) aufgesetzt wird derart, daß der Verschlußring (40) sowohl den Dichtring (35) als auch die Ummantelung (34) kontaktiert.

2. Verfahren nach Anspruch 1, wobei während der Montage der Abdeckelemente (5) an dem Rohr (1)
- die Abdeckelemente (5) um das Rohr (1) gelegt und vormontiert werden, indem sie lose aber verlierfest miteinander verbunden werden,
- die vormontierten Abdeckelemente (5) endmontiert werden, indem sie fest miteinander verbunden werden, wobei die Position der endmontierten Abdeckelemente (5) auf dem Rohr (1) noch veränderbar ist, und
- die endmontierten Abdeckelemente (5) in ihre Montageendposition zum Rohr (1) gebracht werden.

3. Verfahren nach Anspruch 1 oder 2, wobei die Abdeckelemente (5) kraftschlüssig, vorzugsweise ausschließlich mittels einfacher Rast- oder Schnappverbindungen miteinander verbunden werden und bei der Montage des Verschlußringes (40) eine Anzahl formschlüssiger Verbindungen mit der Ummantelung (34) hergestellt werden derart, daß die bei der Montage der Abdeckelemente (5) entstehenden kraftschlüssigen Verbindungen gegen ungewolltes Öffnen gesichert sind.

4. Verfahren zum Nachisolieren einer Verbindungsstelle (11) von medienführenden Rohren (2),
wobei die Verbindungsstelle (11) mit einem Verfahren nach einem der Ansprüche 1 bis 3 mit einer Abdeckvorrichtung (44) abgedeckt wird, welche Abdeckvorrichtung (44) zwischen sich und dem mediumführenden Rohr (2) einen druckdicht verschließbaren Aufnahmeraum (17) für ein Isoliermaterial ausbildet und bei welcher durch die Montage des Verschlußringes (40) die notwendige Druckdichte des Aufnahmeraumes (17) der Abdeckvorrichtung (44) hergestellt wird, und
wobei das Isoliermaterial durch eine in einer der Abdeckelemente (5) angeordneten Einlaßöffnung (18) in den Aufnahmeraum (17) eingebracht wird.

5. Abdeckvorrichtung (44) zum Abdecken eines Rohrabschnittes eines Rohres (1), insbesondere zum Abdecken einer Verbindungsstelle (11) von zwei oder mehr medienführenden Rohren (2),
- mit einer Anzahl miteinander verbindbarer Abdeckelemente (5), die zur Bildung einer das Rohr (1) umgreifenden Rohrummantelung (34) an dem Rohr (1) montierbar sind,
- mit wenigstens einem Dichtring (35), der auf wenigstens ein Ende der sich aus den montierten Abdeckelementen (5) ergebenden Ummantelung (34), dabei an dem Rohr (1) anliegend, aufschiebbar ist, um die Position der Ummantelung (34) an dem Rohr (1) festzulegen,
- mit wenigstens einem Verschlußring (40) zur Fixierung des Dichtringes (35) an der Ummantelung (34), dabei die Ummantelung (34) vollständig umgreifend, welcher Verschlußring (40) derart auf den Verbindungsbereich (41) des Dichtringes (35) mit der Ummantelung (34) aufsetzbar ist, daß der Verschlußring (40) sowohl den Dichtring (35) als auch die Ummantelung (34) kontaktiert.

6. Abdeckvorrichtung (44) nach Anspruch 5,
wobei die Abdeckelemente (5) Kraftschluß-Verbindungselemente (6, 8) zur Ausbildung einer kraftschlüssigen Verbindung untereinander aufweisen und
wobei der wenigstens eine Verschlußring (40) zur Sicherung dieser kraftschlüssigen Verbindung eine Anzahl Formschluß-Verbindungselemente (48) zur Ausbildung einer formschlüssigen Verbindung mit der Ummantelung (34) aufweist.

7. Abdeckvorrichtung (44) nach Anspruch 6, wobei jedes dieser Formschluß-Verbindungselemente (48) des Verschlußringes (40) eine gemeinsame Aufnahme für Konstruktionselemente (6, 8) beider Abdeckelemente (5) ausbildet.

8. Abdeckvorrichtung (44) nach einem der Ansprüche 5 bis 7, wobei der Verschlußring (40) mehrteilig ausgeführt ist und die Teile (43) des Verschlußringes (40) kraftschlüssig, vorzugsweise ausschließlich mittels einfacher Rast- oder Schnappverbindungen, miteinander verbindbar sind.

9. Abdeckvorrichtung (44) nach Anspruch 8, wobei der Verschlußring (40) zur Sicherung der kraftschlüssigen Verbindung der Teile (43) des Verschlußringes (40) untereinander zweite Formschluß-Verbindungselemente (45, 46) aufweist.

## Claims

1. Method for covering a pipe portion of a pipe (1) with the aid of a covering device (44) that encompasses the pipe (1), in particular for covering a connection point (11) of two or more media-conducting pipes (2),
wherein, in order for a pipe sheathing (34) to be formed, a number of covering elements (5) that are interconnectable are assembled on the pipe (1); wherein an annular seal (35) that bears on the pipe (1) is push-fitted onto at least one end of the sheathing (34) resulting from the assembled covering elements (5), on account of which the position of the sheathing (34) on the pipe (1) is established; and
wherein, in order for the annular seal (35) to be fixed to the sheathing (34), a closure ring (40) that completely encompasses the sheathing (34) is placed onto the connection region (41) of the annular seal (35) with the sheathing (34) in such a manner that the closure ring (40) contacts the annular seal (35) as well as the sheathing (34).

2. Method according to Claim 1, wherein during the assembling of the covering elements (5) on the pipe (1)
- the covering elements (5) are placed around the pipe (1) and pre-assembled in that said covering elements (5) are loosely yet captively interconnected;
- the pre-assembled covering elements (5) are finally assembled in that said covering elements (5) are fixedly interconnected, wherein the position of the finally assembled covering elements (5) on the pipe (1) is still variable; and
- the finally assembled covering elements (5) are moved in their finally assembled position to the pipe (1).

3. Method according to Claim 1 or 2, wherein the covering elements (5) are interconnected in a force-fitting manner, preferably exclusively by means of simple latching or snap-fitting connections, and during the assembling of the closure ring (40) a number of form-fitting connections to the sheathing (34) are established in such a manner that the force-fitting connections that are created in the assembling of the covering elements (5) are secured in relation to unintentional opening.

4. Method for subsequently insulating a connection point (11) of media-conducting pipes (2),
wherein the connection point (11) is covered using a method according to one of Claims 1 to 3 with a covering device (44), said covering device (44) configuring a receptacle space (17) for an insulation material between itself and the medium-conducting pipe (2), which receptacle space (17) is closable in a pressure-tight manner, and in which connection point the required pressure tightness of the receptacle space (17) of the covering device (44) is established by way of assembling the closure ring (40); and
wherein the insulation material is inserted into the receptacle space (17) through an inlet opening (18) that is disposed in one of the covering elements (5).

5. Covering device (44) for covering a pipe portion of a pipe (1), in particular for covering a connection point (11) between two or more media-conducting pipes (2),
- having a number of interconnectable covering elements (5) which, in order for a pipe sheathing (34) that encompasses the pipe (1) to be formed, are capable of being assembled on the pipe (1);
- having at least one annular seal (35) which, in order for the position of the sheathing (34) on the pipe (1) to be established, is capable of being push-fitted onto the sheathing (34) resulting from the assembled covering elements (5), so as to bear on the pipe (1) herein;
- having at least one closure ring (40) for fixing the annular seal (35) to the sheathing (34), so as to completely encompass the sheathing (34) herein, said closure ring (40) being push-fittable onto the connection region (41) of the annular seal (35) with the sheathing (34) in such a manner that the closure ring (40) contacts the annular seal (35) as well as the sheathing (34).

6. Covering device (44) according to Claim 5,
wherein the covering elements (5) for configuring a force-fitting connection among one another have force-fitting connection elements (6, 8); and
wherein the at least one closure ring (40) for securing said force-fitting connection has a number of form-fitting connection elements (48) for configuring a form-fitting connection to the sheathing (34).

7. Covering device (44) according to Claim 6, wherein each of said form-fitting connection elements (48) of the closure ring (40) configures a common receptacle for construction elements (6, 8) of both covering elements (5).

8. Covering device (44) according to one of Claims 5 to 7, wherein the closure ring (40) is embodied in multiple parts and the parts (43) of the closure ring (40) are interconnectable in a force-fitting manner, preferably exclusively by means of simple latching or snap-fitting connections.

9. Covering device (44) according to Claim 8, wherein the closure ring (40) for securing the force-fitting connection of the parts (43) of the closure ring (40) among one another has second form-fitting connection elements (45, 46).

## Revendications

1. Procédé pour recouvrir une section de tube d'un tube (1) à l'aide d'un dispositif de recouvrement (44) venant en prise autour du tube (1), en particulier pour recouvrir une zone de raccordement (11) de deux ou plus de deux tubes (2) conduisant des milieux,
une pluralité d'éléments de recouvrement (5) pouvant être raccordés les uns aux autres étant montés sur le tube (1) pour former une gaine de tube (34),
à au moins une extrémité de la gaine (34) résultant des éléments de recouvrement (5) montés, étant enfoncée une bague d'étanchéité (35) s'appliquant contre le tube (1), de sorte que la position de la gaine (34) sur le tube (1) soit fixée, et
une bague de fermeture (40) qui vient complètement en prise autour de la gaine (34), pour la fixation de la bague d'étanchéité (35) sur la gaine (34), étant posée sur la région de raccordement (41) de la bague d'étanchéité (35) avec la gaine (34) de telle sorte que la bague de fermeture (40) vienne à la fois en contact avec la bague d'étanchéité (35) et avec la gaine (34).

2. Procédé selon la revendication 1, dans lequel, pendant le montage des éléments de recouvrement (5) sur le tube (1),
- les éléments de recouvrement (5) sont posés autour du tube (1) et sont prémontés, afin d'être raccordés lâchement mais de manière imperdable les uns aux autres,
- les éléments de recouvrement prémontés (5) sont montés de manière définitive en étant raccordés fixement les uns aux autres, la position des éléments de recouvrement (5) montés de manière définitive sur le tube (1) pouvant encore être modifiée, et
- les éléments de recouvrement (5) montés de manière définitive étant amenés dans leur position de montage par rapport au tube (1).

3. Procédé selon la revendication 1 ou 2, dans lequel les éléments de recouvrement (5) sont raccordés les uns aux autres par engagement par force, de préférence exclusivement au moyen de raccordements simples par encliquetage ou par emboîtement et, lors du montage de la bague de fermeture (40), une pluralité de raccords par engagement par correspondance de formes sont établis avec la gaine (34) de telle sorte que les raccordements par engagement par force produits lors du montage des éléments de recouvrement (5) soient protégés contre une ouverture indésirable.

4. Procédé de ré-isolation d'une zone de raccordement (11) de tubes (2) conduisant des milieux,
la zone de raccordement (11) étant recouverte au moyen d'un procédé selon l'une quelconque des revendications 1 à 3 avec un dispositif de recouvrement (44), lequel dispositif de recouvrement (44) constitue, entre lui et le tube (2) conduisant des milieux, un espace de réception (17) pouvant être fermé de manière étanche à la pression pour un matériau d'isolation et dans lequel la densité de pression nécessaire de l'espace de réception (17) du dispositif de recouvrement (44) est produite par le montage de la bague de fermeture (40), et
le matériau d'isolation est introduit à travers une ouverture d'entrée (18) dans l'espace de réception (17), disposée dans l'un des éléments de recouvrement (5).

5. Dispositif de recouvrement (44) pour le recouvrement d'une section de tube d'un tube (1), en particulier pour le recouvrement d'une zone de raccordement (11) de deux ou plus de deux tubes (2) conduisant des milieux,
- comprenant une pluralité d'éléments de recouvrement (5) pouvant être raccordés les uns aux autres, qui peuvent être montés sur le tube (1) pour former une gaine de tube (34) venant en prise autour du tube (1),
- comprenant au moins une bague d'étanchéité (35) qui peut être enfoncée sur au moins une extrémité de la gaine (34) résultant des éléments de recouvrement (5) montés, en s'appliquant en l'occurrence contre le tube (1), afin de fixer la position de la gaine (34) sur le tube (1),
- comprenant au moins une bague de fermeture (40) pour la fixation de la bague d'étanchéité (35) sur la gaine (34), venant en prise en l'occurrence complètement autour de la gaine (34), laquelle bague de fermeture (40) peut être posée sur la région de raccordement (41) de la bague d'étanchéité (35) avec la gaine (34) de telle sorte que la bague de fermeture (40) vienne en contact à la fois avec la bague d'étanchéité (35) et avec la gaine (34).

6. Dispositif de recouvrement (44) selon la revendication 5,
dans lequel les éléments de recouvrement (5) présentent des éléments de raccordement par engagement par force (6, 8) pour réaliser un raccordement par engagement par force entre eux, et
dans lequel l'au moins une bague de fermeture (40) pour la fixation de ce raccordement par engagement par force, présente une pluralité d'éléments de raccordement par engagement par correspondance de formes (48) pour réaliser un raccordement par engagement par correspondance de formes avec la gaine (34).

7. Dispositif de recouvrement (44) selon la revendication 6, dans lequel chacun de ces éléments de raccordement par engagement par correspondance de formes (48) de la bague de fermeture (40) constitue un logement commun pour des éléments de construction (6, 8) des deux éléments de recouvrement (5).

8. Dispositif de recouvrement (44) selon l'une quelconque des revendications 5 à 7, dans lequel la bague de fermeture (40) est réalisée en plusieurs parties et les parties (43) de la bague de fermeture (40) peuvent être raccordées les unes aux autres par engagement par force, de préférence exclusivement au moyen de raccordements simples par encliquetage ou par emboîtement.

9. Dispositif de recouvrement (44) selon la revendication 8, dans lequel la bague de fermeture (40), pour la fixation du raccordement par engagement par force des pièces (43) de la bague de fermeture (40) les unes aux autres, présente des deuxièmes éléments de raccordement par engagement par correspondance de formes (45, 46).
